# EUROPEAN PATENT SPECIFICATION

(11) **EP 4 406 818 B1**
(45) Date of publication and mention of the grant of the patent: **28.01.2026**
(21) Application number: 23211117.9
(22) Date of filing: 21.11.2023
(51) Int. Cl.: B62J 9/24, B62J 9/30

(54) **STRADDLED VEHICLE**
GRÄTSCHSITZFAHRZEUG
VÉHICULE À SELLE

(30) Priority: 24.01.2023 JP 2023009027
(43) Date of publication of application: 31.07.2024
(73) Proprietor: Yamaha Hatsudoki Kabushiki Kaisha, Iwata-shi, Shizuoka 438-8501 (JP)
(72) Inventor: Shinohara, Shoya, Iwata-shi, Shizuoka, 4388501 (JP); Satonaka, Yukinari, Iwata-shi, Shizuoka, 4388501 (JP)
(74) Representative: Grünecker Patent- und Rechtsanwälte PartG mbB

(56) References cited:
- EP-A1- 3 747 748
- EP-B1- 3 018 043
- EP-B1- 3 265 370
- WO-A1-2019/003700

## Description

The present invention relates to a straddled vehicle.

The prior art document EP 3 018 043 B1 discloses straddled vehicle having a vehicle body, a seat and a carrier on which an additional storage box can be removably mounted. A control unit receives a signal from a remote control key and perform an ID matching process and unlock the additional storage box. The control unit and remote control key start the ID matching process by operating a switch provided near a grip of the additional storage box. The switch is disposed rearward of the control unit and rearward of the carrier. The subject-matter of claim 1 differs from the straddled vehicle and portable transmitter of EP3018043 B1 in the exact location of the switch that is configured to be operated to change the locking state of the storage case. More specific, switch 60s is not mounted to the vehicle body 1f at a front side of bracket 50 in the vehicle front-rear direction.

A conventional straddled vehicle is configured to change a locking state of the storage case by detecting an identification signal from a portable transmitter. The straddled vehicle includes a receiver and a switch.

The receiver recognizes the portable transmitter by receiving the identification signal from the portable transmitter with wireless communication. The storage case is unlocked by operating the switch in a state where the portable transmitter is recognized. Alternatively, the storage case is locked by operating the switch in the state where the portable transmitter is recognized.

For example, the straddled vehicle disclosed in PCT International Publication No. WO2020/174544 includes a communication unit which communicates with a smart key. When the communication unit recognizes the smart key, on/off of a main switch becomes effective and a trunk case is unlocked by turning on the main switch.

In the conventional straddled vehicle, the receiver recognizes the portable transmitter by receiving the identification signal from the portable transmitter. However, a detection range in which the receiver detects the identification signal is limited to a small range, for example, the small range from 1m to 2m from the receiver. Thereby, when a rider having the portable transmitter is positioned outside the detection range of the receiver, the receiver can't recognize the portable transmitter.

For example, it is difficult for the receiver to recognize the portable transmitter in case that the receiver is disposed on a rear portion of the vehicle and the portable transmitter is positioned at a front side of the vehicle. Alternatively, it is difficult for the receiver to recognize the portable transmitter in case that the receiver is disposed on a front portion of the vehicle and the portable transmitter is positioned at a rear side of the vehicle.

In addition, it is difficult for the receiver to recognize the portable transmitter when the rider approaches the switch and operates the switch in case that the switch is disposed far away from the receiver in a state where the receiver is disposed on the front portion of the vehicle or the rear portion of the vehicle.

Furthermore, it is necessary for the rider to move from the front portion of the vehicle to the rear portion of the vehicle for opening and closing the storage case after the rider operates the switch, in case that the receiver is disposed on the front portion of the vehicle and the switch is disposed near the receiver in a state where the storage case is disposed on the rear portion of the vehicle.

An object of the present invention is to provide a straddled vehicle which can easily recognize a portable transmitter positioned around the straddled vehicle and can improve accessibility to a storage case. According to the present invention said object is solved by a straddled vehicle and a portable transmitter having the features of independent claim 1. Preferred embodiments are laid down in the dependent claims.

A straddled vehicle according to one aspect is configured to mount a storage case. The straddled vehicle is configured to change a locking state of the storage case by detecting an identification signal from a portable transmitter. The straddled vehicle a vehicle body, a seat, a bracket, a receiver and a switch.

The seat is provided on the vehicle body. The bracket is disposed at a rear side than the seat. The bracket is provided on the vehicle body to mount the storage case to the vehicle body. The receiver is mounted to the vehicle body at a lower side than the seat. The receiver is configured to receive the identification signal from the portable transmitter. The switch is mounted to the vehicle body at the rear side than the receiver and at a front side than the bracket. The switch is configured to be operated to change the locking state of the storage case.

In the straddled vehicle according to this aspect, the receiver can easily recognize the portable transmitter even if the portable transmitter is positioned at the front side than the straddled vehicle or at the rear side than the straddled vehicle, since the receiver is mounted to the vehicle body at the lower side than the seat.

In addition, the receiver can easily recognize the portable transmitter even if the rider approaches the switch to operate the switch, since the switch is mounted to the vehicle body at the rear side than the receiver and at the front side than the bracket.

Furthermore, the rider can easily access the storage case after the rider operates the switch. In other words, the straddled vehicle, which can easily recognize the portable transmitter positioned around the straddled vehicle and can improve accessibility to the storage case, is provided.

The vehicle body can have a vehicle center line extending in a vehicle longitudinal direction. In this case, the switch is mounted to the vehicle body at one side in a vehicle width direction orthogonal to the vehicle center line. In this configuration, the receiver can easily recognize the portable transmitter when the rider approaches the switch.

The receiver can be mounted to the vehicle body at the one side in the vehicle width direction. In this configuration, the receiver can more easily recognize the portable transmitter when the rider approaches the switch, since the receiver is mounted to the vehicle body at the same side as the switch.

The straddled vehicle can further comprise a key cylinder. In this case, the key cylinder is configured to open and close the seat. The key cylinder is mounted to the vehicle body at the one side in the vehicle width direction. In this configuration, the rider can easily open and close the seat after the rider access the storage case, since the key cylinder is mounted to the vehicle body at the same side as the switch. In addition, the rider can easily access the storage case after the rider opens and closes the seat.

The straddled vehicle can further comprise a rear cover. In this case, the rear cover is mounted to the vehicle body at the rear side than the seat. The switch is mounted to a side surface of the rear cover. In this configuration, the rider can easily access the switch.

The straddled vehicle can further comprise a rear cover. In this case, the rear cover is mounted to the vehicle body at the rear side than the seat. The switch is mounted to an upper surface of the rear cover. In this configuration, the rider can easily access the switch.

The vehicle body can include a first rear frame and a second rear frame. In this case, the first rear frame supports the seat and a second rear frame. The second rear frame is disposed at the lower side than the first rear frame and is connected to a rear portion of the first rear frame. The receiver is disposed at an upper side than the second rear frame. In this configuration, the receiver can easily recognize the portable transmitter, since the receiver is disposed at an upper side than the second rear frame.

The receiver can be disposed at the lower side than the first rear frame. In this configuration, the receiver can easily recognize the portable transmitter, since the receiver is disposed at the lower side than the first rear frame.

The straddled vehicle can further comprise a tandem step. In this case, the tandem step includes a mounting portion mounted to the vehicle body. The switch is disposed at the rear side than the mounting portion of the tandem step. In this configuration, it is possible to prevent a passenger from contacting the switch in a state where the rider and the passenger ride on the straddled vehicle.

The vehicle body can include a first rear frame and a second rear frame. In this case, the first rear frame supports the seat and a second rear frame. The second rear frame is disposed at the lower side than the first rear frame and is connected to a rear portion of the first rear frame. At least a portion of the switch is disposed at the upper side than the second rear frame. In this configuration, the rider can easily operate the switch, since the at least a portion of the switch is disposed at the upper side than the second rear frame.

The straddled vehicle can further comprise the storage case. In this case, the storage case is mounted to the bracket. In this configuration, the rider can easily access the storage case after the rider operates the switch.

The switch can be spaced apart from the storage case so as not to overlap the storage case in a vehicle side view. In this configuration, the straddled vehicle can improve accessibility to the storage case without reducing usability of the switch.

The straddled vehicle can further comprise a controller. In this case, the controller is configured to authenticate the portable transmitter based on the identification signal. The storage case includes a signal receiving unit. The signal receiving unit is configured to receive a command signal for changing the locking state from the controller. The controller is configured to transmit the command signal to the signal receiving unit when the switch is operated in a state where the portable transmitter is authenticated.

In this configuration, the controller authenticates the portable transmitter based on the identification signal from the portable transmitter and the locking state of the storage case is changed based on the command signal from the controller. Thereby, the locking state of the storage case can be easily changed by the controller.

The switch can be configured to be operated to change the locking state of the storage case at least from a locked state to an unlocked state. In this case, the locking state of the storage case includes the locked state and the unlocked state. The locking state of the storage case can be changed from the locked state to the unlocked state by operating the switch.

The vehicle body can have a vehicle center line extending in a longitudinal direction and a mounting surface on which the switch is mounted. In this case, the mounting surface inclines inward in a vehicle width direction orthogonal to the vehicle center line as the mounting surface goes toward the lower side. In this configuration, it is possible to prevent the passenger from contacting the switch in a state where the rider and the passenger ride on the straddled vehicle.

A straddled vehicle according to the other aspect is configured to mount a storage case. The straddled vehicle is configured to change a locking state of the storage case by detecting an identification signal from a portable transmitter. The straddled vehicle a vehicle body, a seat, a bracket, a receiver and a switch holder.

The seat is provided on the vehicle body. The bracket is disposed at a rear side than the seat. The bracket is provided on the vehicle body to mount the storage case to the vehicle body. The receiver is mounted to the vehicle body at a lower side than the seat. The receiver is configured to receive the identification signal from the portable transmitter.

The switch holder configured to hold a switch operated to change the locking state of the storage case. The switch holder is mounted to the vehicle body at the rear side than the receiver and at a front side than the bracket.

With the straddled vehicle according to this aspect, the receiver can easily recognize the portable transmitter even if the portable transmitter is positioned at the front side than the straddled vehicle or at the rear side than the straddled vehicle, since the receiver is mounted to the vehicle body at the lower side than the seat.

In addition, the receiver can easily recognize the portable transmitter even if the rider approaches the switch to operate the switch, since the switch holder is mounted to the vehicle body at the rear side than the receiver and at the front side than the bracket.

Furthermore, the rider can easily access the storage case after the rider operates the switch. In other words, the straddled vehicle, which can easily recognize the portable transmitter positioned around the straddled vehicle and can improve accessibility to the storage case, is provided.

### Advantageous Effects of Invention

According to the present invention, the straddled vehicle, which can easily recognize the portable transmitter positioned around the straddled vehicle and can improve accessibility to the storage case, is provided.

### BRIEF DESCRIPTION OF THE DRAWINGS

FIG. 1 is a side view of a straddled vehicle according to an embodiment;
FIG. 2 is a top view of the straddled vehicle;
FIG. 3 is a partially enlarged side view of a rear portion of the straddled vehicle;
FIG. 4 is a partially enlarged side view of the rear portion of the straddled vehicle in a state where the storage case is removed from the straddled vehicle;
FIG. 5 is a side view of a rear frame and a bracket;
FIG. 6 is a top view of the rear frame and the bracket;
FIG. 7 is a functional block diagram of a lock changing system;
FIG. 8 is a flowchart of the lock changing system; and
FIG. 9 is a flowchart of the lock changing system.

### DETAILED DESCRIPTION OF PREFERRED EMBODIMENTS

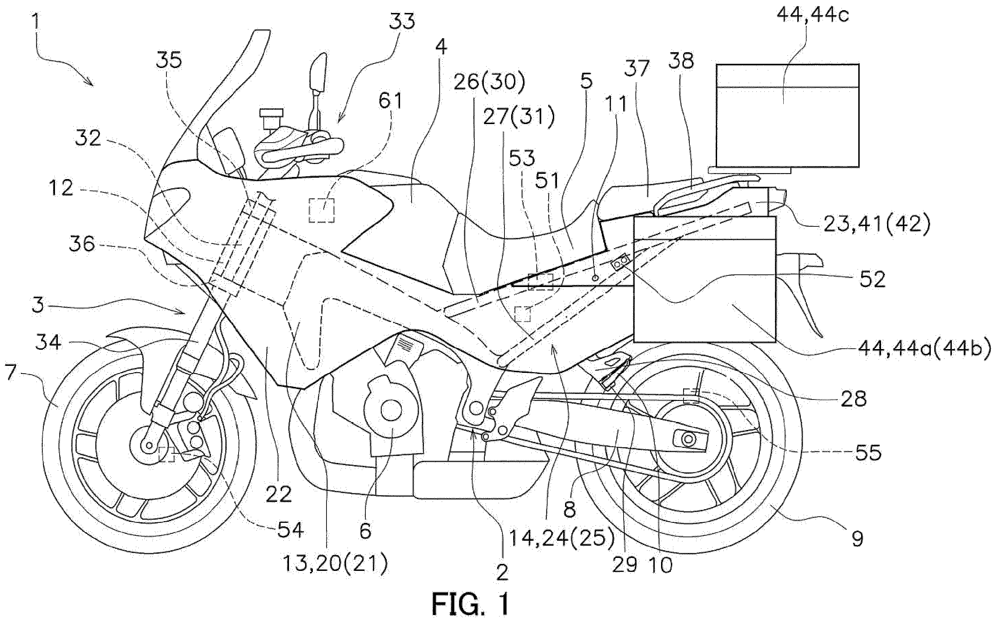

A straddled vehicle and portable transmitter according to an embodiment will be described below with reference to drawings. FIG. 1 is a side view of the straddled vehicle 1 according to the embodiment.

As shown in FIG. 1, the straddled vehicle 1 includes a vehicle frame 2 (an example of a vehicle body), a steering device 3, a fuel tank 4, a rider seat 5 (an example of a seat), a power unit 6, a front wheel 7, a swing arm 8 and a rear wheel 9. The straddled vehicle 1 includes a tandem step 10 and a key cylinder 11.

In this embodiment, a front side of a rider (a front side in FIG. 1), a rear side of the rider (a rear side in FIG. 1), a left side of the rider, and a right side of the rider respectively corresponds to each of front, rear, left and right directions of the straddled vehicle 1 in a state where the rider is seated on the rider seat 5.

An upper side of the rider (an upper side in FIG. 1) corresponds to an upper direction of the straddled vehicle 1. A downward direction of the straddled vehicle 1 (a downward side in FIG. 1) is a direction opposite to the upward direction of the straddled vehicle 1. The downward direction of the straddled vehicle 1 is a direction in which gravity acts on the straddled vehicle 1.

A vehicle front view indicates a state where a front portion of the straddled vehicle 1 is viewed from the front side thereof. A vehicle side view indicates a state where a side surface of the straddled vehicle 1 is viewed from the left side thereof or the right side thereof. A vehicle rear view indicates a state where a rear portion of the straddled vehicle 1 is viewed from the rear side thereof. A vehicle upper view indicates a state where an upper portion of the straddled vehicle 1 is viewed from the upper side thereof.

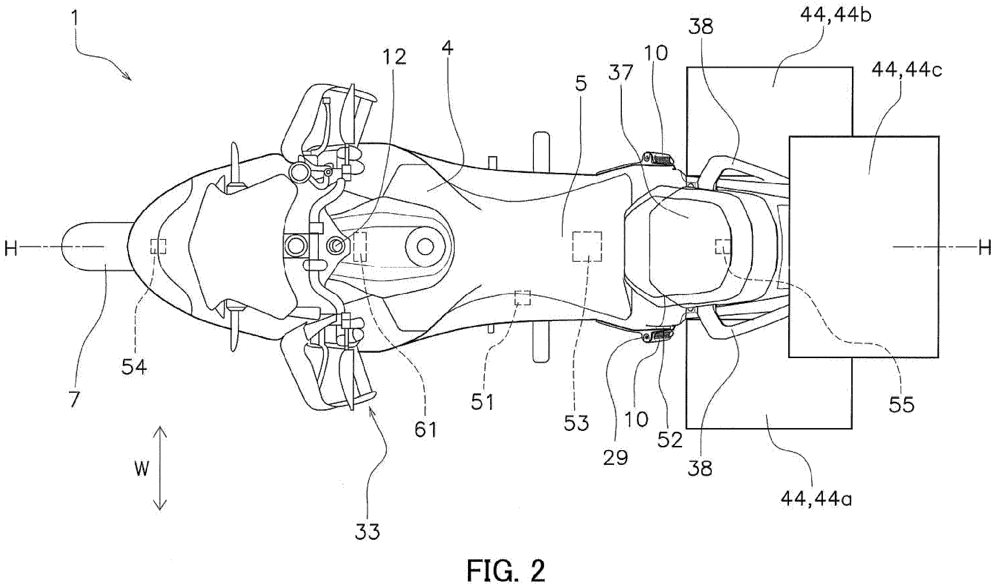

As shown in FIG. 2, the straddled vehicle 1, for example, the vehicle frame 2, has a vehicle center plane H extending in a vehicle front-rear direction. The vehicle center plane H extends in the front-rear direction and a vehicle vertical direction. The vehicle center plane H passes through a head pipe 12 in the front-rear direction.

For example, the vehicle center plane H passes through a center of the head pipe 12 in the front-rear direction in the vehicle upper view. The vehicle center plane H forms a vehicle center line extending in the front-rear direction in the vehicle upper view. A vehicle width direction W is defined as a direction orthogonal to the vehicle center plane H. The vehicle width direction W corresponds to a vehicle left-right direction.

As shown in FIG. 1, the vehicle frame 2 includes a head pipe 12, a main frame 13, and a rear frame 14. The main frame 13 is connected to the head pipe 12. The main frame 13 includes a pair of main frames 20, 21. The pair of main frames 20, 21 extend rearward from the head pipe 12 and are spaced apart from each other in the vehicle width direction W.

FIG. 1 shows the left main frame 20. The right main frame 21 is disposed as a mirror image of the left main frame 20 with respect to the vehicle center plane H. A reference number 21 of the right main frame is indicated in a bracket with the reference number 20 of the left main frame.

As shown in FIG. 1, the rear frame 14 is connected to the main frame 13. The rear frame 14 includes a pair of rear frames 24, 25. The pair of rear frames 24, 25, for example, a left rear frame 24 and a right rear frame 25, respectively extend rearward from the pair of main frames 20, 21.

FIG. 1 shows the left rear frame 24. The right rear frame 25 is disposed as a mirror image of the left rear frame 24 with respect to the vehicle center plane H. The right rear frame 25 is shown in brackets with the left rear frame 24.

As shown in FIG. 1, the left rear frame 24 and the right rear frame 25 are disposed at a lower side than the rider seat 5. The pair of rear frames 24, 25 are respectively connected to the pair of main frames 20, 21.

The left rear frame 24 and the right rear frame 25 support the rider seat 5. The left rear frame 24 includes a first left rear frame 26 and a second left rear frame 27.

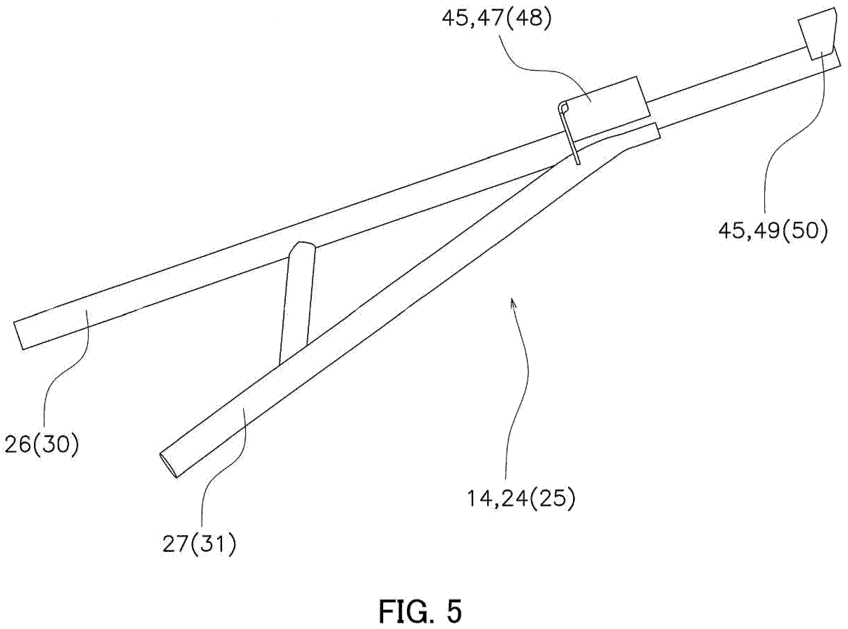

As shown in FIG. 1, the first left rear frame 26 supports the rider seat 5. The first left rear frame 26 is connected to the left main frame 20. The second left rear frame 27 supports the first left rear frame 26 (see FIG. 5). The second left rear frame 27 is disposed at the lower side than the first left rear frame 26. The second left rear frame 27 is connected to the left main frame 20 and a rear portion of the first left rear frame 26.

As shown in FIG. 1, the tandem step 10 is mounted to the second left rear frame 27 via an arm portion 28. The tandem step 10 is swingably mounted to the arm portion 28. For example, the tandem step 10 is swingably mounted to the arm portion 28 via a swing shaft 29 (an example of a mounting portion).

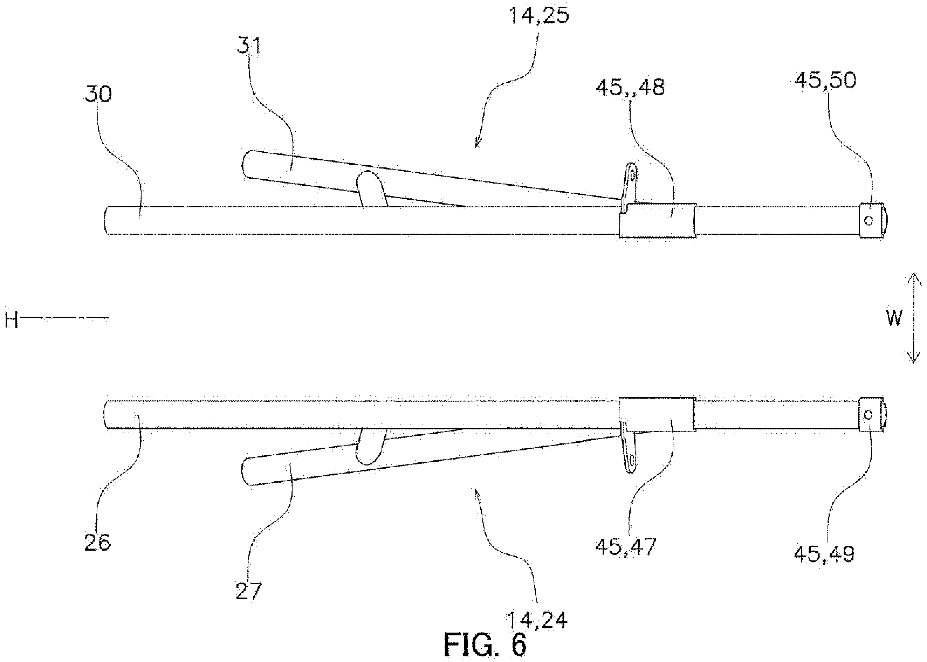

The right rear frame 25 is disposed as a mirror image of the left rear frame 24 with respect to the vehicle center plane H (see FIG. 6). Except for this point, the configuration of the right rear frame 25 is the same as the configuration of the left rear frame 24.

As shown in FIG. 1, the right rear frame 25 includes a first right rear frame 30 and a second right rear frame 31. The reference number 30 of the first right rear frame and the reference number 31 of the second right rear frame are respectively indicated in brackets with the reference number 26 of the first left rear frame and a reference 27 number of the second left rear frame.

The first right rear frame 30 is spaced apart from the first left rear frame 26 in the vehicle width direction W (see FIG. 6). The first right rear frame 30 supports the rider seat 5 with the first left rear frame 26. The first right rear frame 30 is connected to the right main frame 21.

The second right rear frame 31 is spaced apart from the second left rear frame 27 in the vehicle width direction W (see FIG. 6). The second right rear frame 31 supports the first right rear frame 30 (see FIG. 5). The second right rear frame 31 is disposed at the lower side than the first right rear frame 30. The second right rear frame 31 is connected to the right main frame 21 and a rear portion of the first right rear frame 30.

As shown in FIG. 1, the steering device 3 is rotatably supported on the head pipe 12. The steering device 3 rotatably supports the front wheel 7. The steering device 3 includes a steering shaft 32, a handle member 33, a front fork 34, an upper bracket 35 and a lower bracket 36.

The steering shaft 32 is inserted into the head pipe 12. The handle member 33 is disposed at an upper side than the head pipe 12. The handle member 33 is connected to the steering shaft 32. The handle member 33 extends in the left-right direction.

The front fork 34 is connected to steering shaft 32 via the upper bracket 35 and the lower bracket 36. The front fork 34 rotatably supports the front wheel 7.

As shown in FIGS. 1 and 2, the fuel tank 4 is disposed at a rear side than the head pipe 12. The fuel tank 4 is disposed at a front side than the rider seat 5. The fuel tank 4 is disposed at the upper side than the main frame 13 and is supported by the main frame 13.

As shown in FIGS. 1 and 2, the rider seat 5 is provided on the vehicle frame 2. The rider seat 5 is supported by the rear frame 14. For example, the rider seat 5 is supported by the first left rear frame 26 and the first right rear frame 30.

As shown in FIG. 1, the rider seat 5 is disposed at the upper side than the rear frame 14. The rider seat 5 is disposed at the rear side than the fuel tank 4. A tandem seat 37 is disposed at the rear side than the rider seat 5. The rider seat 5 is disposed between the fuel tank 4 and the tandem seat 37.

As shown in FIG. 1, the tandem seat 37 is supported by the rear frame 14. For example, the tandem seat 37 is supported by the first left rear frame 26 and the first right rear frame 30.

As shown in FIGS. 1 and 2, a grab bar 38 is disposed around a rear portion of the tandem seat 37. The grab bar 38 surround the rear, left, and right portions of tandem seat 37. The grab bar 38 is supported by the rear frame 14.

As shown in FIG. 1, the key cylinder 11 is configured to open and close the rider seat 5. The key cylinder 11 is disposed at one side in the vehicle width direction W. In this embodiment, the key cylinder 11 is disposed at the left side in the vehicle width direction W. The key cylinder 11 is disposed at the lower side than the rider seat 5. The key cylinder 11 is disposed at the front side than a switch 52 which is described later.

The key cylinder 11 is mounted to the vehicle frame 2. For example, the key cylinder 11 is mounted to a left rear cover 41 which is described later. The left rear cover 41 is mounted to the first left rear frame 26 and the first right rear frame 30. In other words, the key cylinder 11 is mounted to the first left rear frame 26 and the first right rear frame 30 via the left rear cover 41.

As shown in FIG. 1, the power unit 6 is disposed at the lower side than the fuel tank 4. The power unit 6 is supported by main frame 13. For example, the power unit 6 includes an internal combustion engine. The rear wheel 9 is supported by main frame 13 via the swing arm 8. The rear wheel 9 is rotatably supported by the swing arm 8. The swing arm 8 is swingably supported by the main frame 13.

The straddled vehicle 1 includes a main cowl 22 and a rear cover 23. The main cowl 22 is disposed at the front side than the head pipe 12, at the left side than the head pipe 12 and at the right side of the head pipe 12. The main cowl 22 is mounted to the main frame 13.

As shown in FIG. 1, the main cowl 22 is disposed at the front side than the handle member 33, at the lateral side than a front portion of the fuel tank 4, at the lower side than the fuel tank 4 and at the lower side than the rider seat 5. The main cowl 22 covers an upper portion of the left main frame 20, an upper portion of the right main frame 21, a front portion of the left rear frame 24 and a front portion of the right rear frame 25.

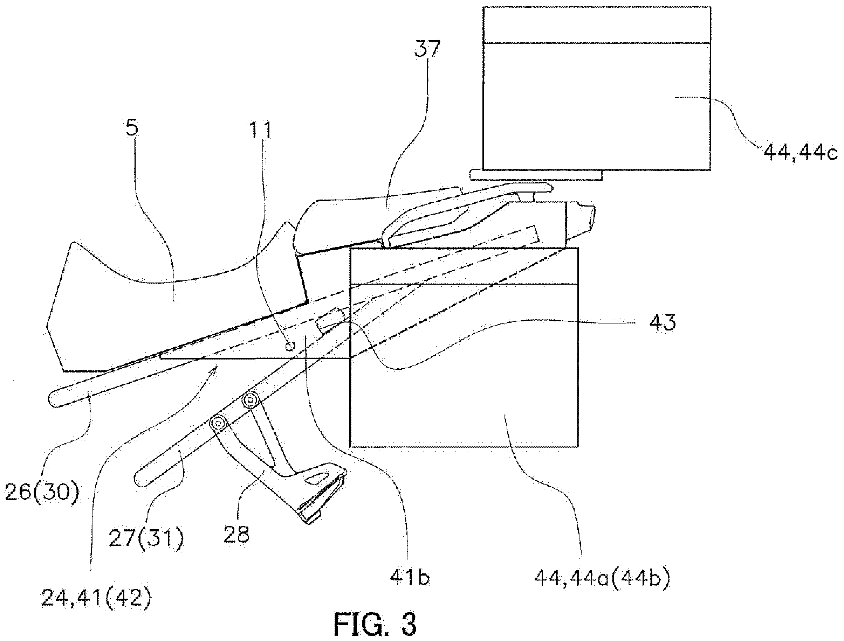

As shown in FIGS. 1 and 3, the rear cover 23 is disposed at the lower side than the rider seat 5. For example, the rear cover 23 is disposed at the rear side than the rider seat 5. The rear cover 23 is disposed at the lower side than the rider seat 5 and at the lower side than the tandem seat 37. The rear cover 23 includes a pair of rear covers 41, 42, for example, the left rear cover 41 and a right rear cover 42.

The right rear cover 42 is disposed as a mirror image of the left rear cover 41 with respect to the vehicle center plane H. The reference number 42 of the right rear cover is indicated in brackets with the reference number 41 of the left rear cover.

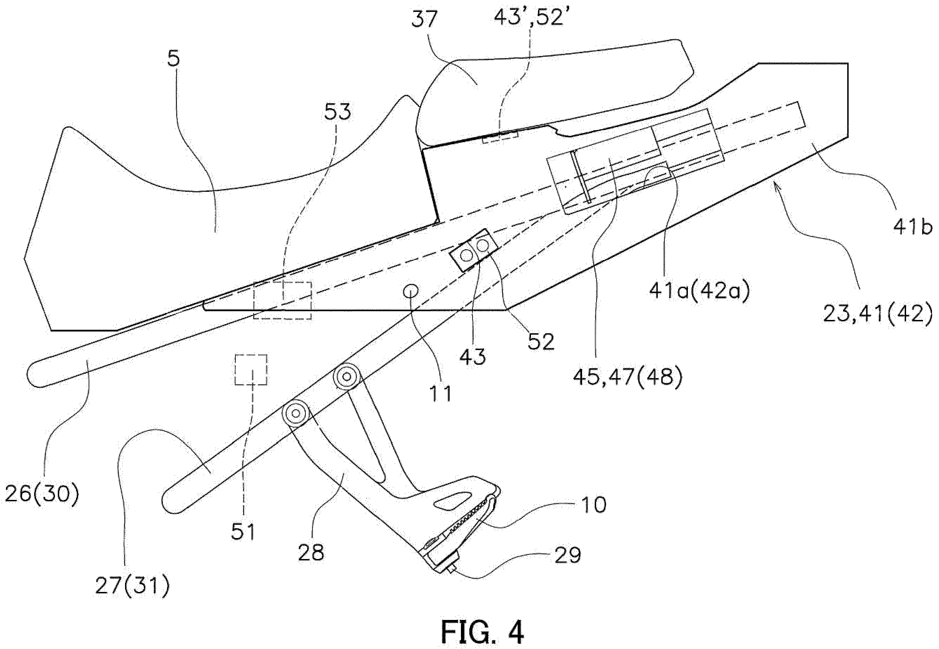

As shown in FIGS. 1 and 3, the left rear cover 41 covers middle and rear portions of the left rear frame 24, for example, the middle and rear portions of the first left rear frame 26 and the second left rear frame 27. The left rear cover 41 is mounted to the first left rear frame 26. As shown in FIG. 4, the left rear cover 41 includes a first side case mounting hole 41a and a switch mounting surface 41b.

As shown in FIG. 4, the first side case mounting hole 41a is a hole which is used to mount a left-side case 44a, which is described later, to the first left rear frame 26. The switch 52, for example, a switch holder 43 which is described later, is provided on the switch mounting surface 41b. The switch mounting surface 41b forms an outer surface of the left rear cover 41 so as to incline inward in the vehicle width direction W as the switch mounting surface 41b goes toward the lower side.

As shown in FIGS. 1 and 3, the right rear cover 42 covers middle and rear portions of the right rear frame 25, for example, the middle and rear portions of the first right rear frame 30 and the second right rear frame 31. The right rear cover 42 is mounted to the first right rear frame 30. As shown in FIG. 4, the right rear cover 42 includes a second side case mounting hole 42a. The second side case mounting hole 42a is a hole which is used to mount a right-side case 44b, which will be described late, to the first right rear frame 30.

As shown in FIG. 4, the straddled vehicle 1 includes the switch holder 43. The switch holder 43 is configured to hold the switch 52. The switch holder 43 is a hole which holds the switch 52.

The switch holder 43 is disposed at one side in the vehicle width direction W. In this embodiment, the switch holder 43 is disposed at the left side in the vehicle width direction W. The switch holder 43 is disposed at the upper side than the second left rear frame 27. The switch holder 43 is disposed at the lower side than the first left rear frame 26.

The switch holder 43 is disposed at the rear side than a receiver 51 and at the front side than a bracket 45. The receiver 51 and the bracket 45 are described later. For example, the switch holder 43 is disposed at the rear side than the receiver 51 in the vehicle side view and at the front side than a first side bracket 47 which is described later in the vehicle side view. The switch holder 43 is disposed at the rear side than the receiver 51 in the vehicle side view and at the front side than a second side bracket 48 which is described later in the vehicle side view.

The switch holder 43 is provided on a side surface of the left rear cover 41 or an upper surface of the left rear cover 41. In this embodiment, the switch holder 43 is provided on the side surface of the left rear cover 41. An example in which the switch holder 43 is provided on the upper surface of the left rear cover 41 is indicated by a dashed line using the reference number "43'" in FIG. 4.

The left rear cover 41 is mounted to the first left rear frame 26. The switch holder 43 is provided on the switch mounting surface 41b of the left rear cover 41. In other words, the switch holder 43 is mounted to the first left rear frame 26 via the left rear cover 41.

As shown in FIGS. 1 to 3, the straddled vehicle 1 is configured to mount a storage case 44. The straddled vehicle 1 includes the storage case 44 shown in FIGS. 1-3 and the bracket 45 shown in FIGS. 4-6. In this embodiment, an example in which the storage case 44 is a component of the straddled vehicle 1 is described, but the storage case 44 may not be the component of the straddled vehicle 1.

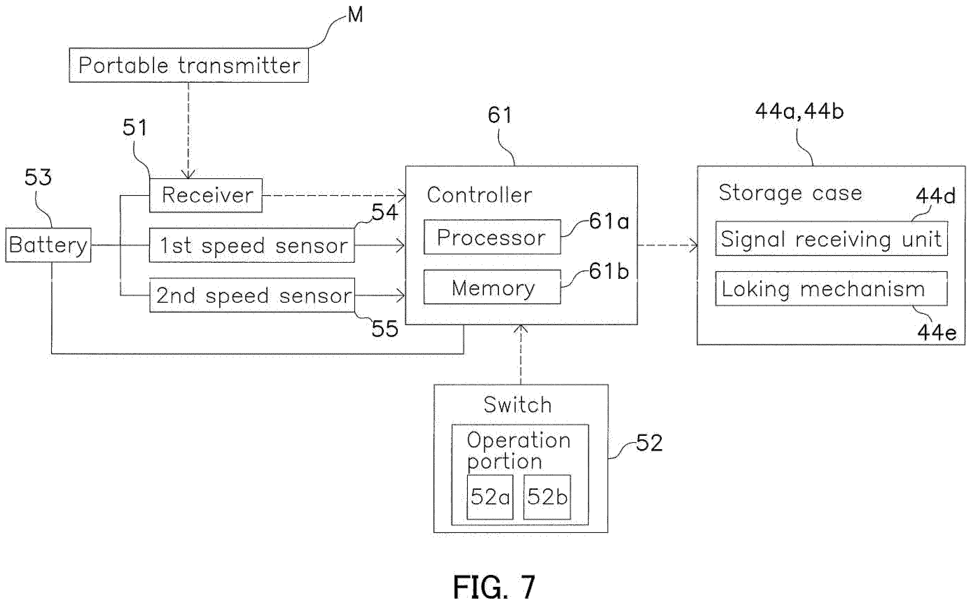

The storage case 44 is configured to accommodate articles. The storage case 44 is configured to open and close for accommodating the articles and taking out the articles. The storage case 44 includes a locking mechanism 44e shown in FIG. 7. The locking mechanism 44e is configured to change the locking state. The locking state includes an unlocked state which permits opening and closing of the storage case 44 and a locked state which restricts opening and closing of the storage case 44.

The storage case 44 shown in FIGS. 1-3 is detachably mounted to the vehicle frame 2 via the bracket 45 shown in FIGS. 4-6. As shown in FIGS. 1 to 3, the storage case 44 includes the left-side case 44a, the right-side case 44b, and a top case 44c.

The left-side case 44a is disposed at the left side than the vehicle frame 2 at the rear portion of the vehicle frame 2. The left-side case 44a is disposed at the left side than the first left rear frame 26. The right-side case 44b is disposed at the right side than the vehicle frame 2 at the rear portion of the vehicle frame 2. The right-side case 44b is disposed at the right side than the first right rear frame 30.

The top case 44c is disposed at the rear side than the rider seat 5. For example, the top case 44c is disposed at the rear side than the tandem seat 37. The top case 44c is disposed at the upper side than the vehicle frame 2 at the rear portion of the vehicle frame 2. Specifically, the top case 44c is disposed at the upper side than the rear end of the first left rear frame 26 and the rear end of the first right rear frame 30.

The bracket 45 shown in FIGS. 4 to 6 is used to mount the storage case 44 to the vehicle frame 2. As shown in FIGS. 5 and 6, the bracket 45 is provided on the vehicle frame 2, for example, the first left rear frame 26 and the first right rear frame 30. The bracket 45 includes the first side bracket 47 and the second side bracket 48. The bracket 45 includes a first rear bracket 49 and a second rear bracket 50.

The first side bracket 47 shown in FIGS. 5 and 6 is used to mount the left-side case 44a. As shown in FIG. 4, the first side bracket 47 is disposed at the rear side than the rider seat 5. The first side bracket 47 is disposed at the lower side than the tandem seat 37.

As shown in FIGS. 5 and 6, the first side bracket 47 is mounted to the rear portion of the first left rear frame 26. For example, the left-side case 44a is detachably mounted to the first side bracket 47 via the first side case mounting hole 41a shown in FIG. 4.

The second side bracket 48 shown in FIGS. 5 and 6 is used to mount the right-side case 44b. As shown in FIG. 4, the second side bracket 48 is disposed at the rear side than the rider seat 5. The second side bracket 48 is disposed at the lower side than the tandem seat 37.

As shown in FIGS. 5 and 6, the second side bracket 48 is mounted to the rear portion of the first right rear frame 30. For example, the right-side case 44b is detachably mounted to the second side bracket 48 via the second side case mounting hole 42a shown in FIG. 4.

The first rear bracket 49 and the second rear bracket 50 shown in FIGS. 5 and 6 are used to mount the top case 44c. The first rear bracket 49 is mounted to the rear end of the first left rear frame 26. The second rear bracket 50 is mounted to the rear end of the first right rear frame 30. The top case 44c is detachably mounted to the first rear bracket 49 and the second rear bracket 50 via a stay or stays (not shown).

As shown in FIG. 1, the straddled vehicle 1 includes the receiver 51, the switch 52 and a battery 53. The straddled vehicle 1 includes a first vehicle speed sensor 54, a second vehicle speed sensor 55 and a controller 61.

The receiver 51 is disposed at one side in the vehicle width direction W. In this embodiment, the receiver 51 is disposed at the left side in the vehicle width direction W. The receiver 51 is mounted to the vehicle frame 2, for example, the first left rear frame 26 and/or the first right rear frame 30.

As shown in FIG. 4, the receiver 51 is disposed at the lower side than the rider seat 5. The receiver 51 is disposed at the lower side than the first left rear frame 26. The receiver 51 is disposed at the upper side than second left rear frame 27. In other words, the receiver 51 is disposed between the first left rear frame 26 and the second left rear frame 27 in the vertical direction.

As shown in FIG. 7, the receiver 51 is configured to receive an identification signal from a portable transmitter M. The receiver 51 receives the identification signal, which is used to identify the portable transmitter M, from the portable transmitter M. For example, the receiver 51 receives the identification signal from the portable transmitter M according to distance from the portable transmitter M.

Specifically, the receiver 51 receives the identification signal from the portable transmitter M, when the distance between the portable transmitter M and the receiver 51 is smaller than or equal to a predetermined distance. In this case, the receiver 51 transmits the identification signal to controller 61. The receiver 51 does not receive the identification signal from the portable transmitter M, when the distance between the portable transmitter M and the receiver 51 is larger than the predetermined distance. In this case, the receiver 51 does not transmit the identification signal to controller 61.

The switch 52 shown in FIGS. 1 and 4 is disposed at one side in the vehicle width direction W. In this embodiment, the switch 52 is disposed at the left side in the vehicle width direction W. As shown in FIG. 4, the switch 52 is disposed at the rear side than the receiver 51 and at the front side than the bracket 45. For example, the switch 52 is disposed at the rear side than the receiver 51 and at the front side than the first side bracket 47 in the vehicle side view. The switch 52 is disposed at the rear side than the receiver 51 and at the front side than the second side bracket 48 in the vehicle side view.

As shown in FIG. 1, the switch 52 is spaced apart from the storage case 44 so as not to overlap the storage case 44 in the vehicle side view. For example, the switch 52 is spaced apart from the left-side case 44a so as not to overlap the left-side case 44a in the vehicle side view. Specifically, the switch 52 is spaced apart from the left-side case 44a and the right-side case 44b so as not to overlap the left-side case 44a and the right-side case 44b in the vehicle side view.

As shown in FIG. 4, at least a portion of the switch 52 is disposed at the upper side than the second left rear frame 27. In this embodiment, an example in which the switch 52 is disposed at the upper side than the second left rear frame 27 is described, but a portion of the switch 52 can be disposed at the lateral side than the second left rear frame 27. The switch 52 is disposed at the rear side than the swing shaft 29 of the tandem step 10.

The switch 52 is mounted to the side surface of the left rear cover 41 or the upper surface of the left rear cover 41. In this embodiment, the switch 52 is mounted to the side surface of the left rear cover 41. An example in which the switch 52 is provided on the upper surface of the left rear cover 41 is indicated by a dashed line using the reference number "52'" in FIG. 4.

The switch 52 is mounted to the switch holder 43 (the hole) of the left rear cover 41. For example, the switch 52 is elastically engaged with the switch holder 43 (the hole). The left rear cover 41 is mounted to the first left rear frame 26. In other words, the switch 52 is mounted to the first left rear frame 26 via the left rear cover 41.

The switch 52 is operated to change the locking state of the storage case 44. The switch 52 is operated to change the locking state of the left-side case 44a and the right-side case 44b from at least the locking state to the unlocking state.

When the receiver 51 receives the identification signal from the portable transmitter M, the switch 52 changes the locking state of the left-side case 44a and the right-side case 44b from one of the locked state and the unlocked state to the other of the locked state and the unlocked state.

For example, as shown in FIG. 7, the switch 52 includes a lock button 52a which is used to lock the storage case 44 and an unlock button 52b which is used to unlock the storage case 44. The switch 52 transmits a lock signal to the controller 61 when the lock button 52a is pressed. The switch 52 transmits an unlock signal to the controller 61 when the unlock button 52b is pressed.

The battery 53 shown in FIGS. 1 and 4 supplies power to the receiver 51, the first vehicle speed sensor 54, the second vehicle speed sensor 55 and the controller 61. Each of the switch 52 and the storage case 44 contain a battery for operating the switch 52 and a signal receiving unit 44d which is described later.

As shown in FIG. 4, the battery 53 is disposed at the lower side than the rider seat 5. The battery 53 is disposed between the rider seat 5 and the receiver 51 in the vertical direction. For example, the battery 53 is disposed between the rider seat 5 and the second left rear frame 27 in the vertical direction. The battery 53 is mounted to the first left rear frame 26.

As shown in FIG. 1, the first vehicle speed sensor 54 is mounted to a tip portion of the left front fork 34 which is included in the front fork 34. The first vehicle speed sensor 54 detects a rotational speed of the front wheel 7. The first vehicle speed sensor 54 transmits a first rotational speed signal corresponding to the rotational speed of the front wheel 7 to the controller 61.

The second vehicle speed sensor 55 is mounted to a tip portion of the left swing arm 8 which is included in the swing arm 8. The second vehicle speed sensor 55 detects a rotational speed of the rear wheel 9. The second vehicle speed sensor 55 transmits a second rotational speed signal corresponding to the rotation speed of the rear wheel 9 to the controller 61.

As shown in FIG. 7, the controller 61 includes a processor 61a and a memory 61b. The controller 61 can further include an external storage device and an auxiliary storage device such as a hard disk and/or SSD (Solid State Drive).

The processor 61a includes at least one CPU (Central Processing Unit). In this embodiment, an example in which the processor 61a includes one CPU is described. In this embodiment, an example in which the processor 61a includes one CPU is described, but the processor 61a includes a plurality of CPUs.

The processor 61a controls a lock changing system, which will be described later, based on control program recorded in the memory 61b. When control of the lock changing system is executed, the processor 61a reads control data from the memory 61b and records the control data in the memory 61b.

The memory 61b includes a volatile memory such as RAM (Random Access Memory). The memory 61b includes a non-volatile memory such as ROM (Read Only Memory). The memory 61b records the control program and the control data which is used in executing the lock changing system.

The controller 61 shown in FIG. 1 is mounted to the main frame 13. The controller 61 is disposed at the front side than the fuel tank 4. In this embodiment, the portable transmitter M, the switch 52, the receiver 51, the signal receiving unit 44d of the storage case 44 which will be described later and the controller 61 are connected to each other by wireless communication. The controller 61, the battery 53, the first vehicle speed sensor 54 and the second vehicle speed sensor 55 are connected to each other by wire communication. The controller 61, the battery 53, the first vehicle speed sensor 54 and the second vehicle speed sensor 55 can be connected to each other by the wireless communication.

In this embodiment, as shown in FIG. 7, each of the left-side case 44a and the right-side case 44b includes the signal receiving unit 44d. In this embodiment, an example in which the top case 44c does not have the signal receiving unit 44d is described, but the top case 44c can have the signal receiving unit 44d.

The signal receiving unit 44d is supplied with power from the battery which is provided on each of the left-side case 44a, the right-side case 44b and the top case 44c. The signal receiving unit 44d receives the command signal for changing the locking state from the controller 61. The command signal includes the lock signal and the unlock signal.

In the lock changing system, the processor 61a operates as follows. The processor 61a shown in FIG. 7 detects the portable transmitter M. For example, the processor 61a detects the identification signal from the portable transmitter M. Specifically, the processor 61a detects the identification signal from portable transmitter M via the receiver 51. The processor 61a receives the identification signal from the receiver 51 when the distance between the portable transmitter M and the receiver 51 is smaller than or equal to the predetermined distance.

The processor 61a authenticates the portable transmitter M with the identification signal. For example, when the processor 61a receives the identification signal from the receiver 51, the processor 61a compares a first identification information of the portable transmitter M corresponding to the identification signal with a second identification information of the portable transmitter M recorded in the memory 61b. The processor 61a recognizes the portable transmitter M when the first identification information and the second identification information match. The processor 61a does not receive the identification signal from the portable transmitter M when the distance between the portable transmitter M and the receiver 51 is larger than the predetermined distance. The processor 61a does not recognize the portable transmitter M when the processor 61a does not receive the identification signal from the receiver 51.

The processor 61a controls the locking mechanism 44e of the storage case 44 (the left-side case 44a and the right-side case 44b). When the switch 52 is operated in a state where the processor 61a recognizes the portable transmitter M, the processor 61a receives the lock signal or the unlock signal from the switch 52 and transmits the command signal (the lock signal or the unlock signal) to the signal receiving unit 44d of the storage case 44. Thereby, the locking mechanism 44e of the storage case 44 is locked or unlocked.

When the switch 52 is operated in a state where the processor 61a does not recognize the portable transmitter M, the processor 61a receives the lock signal or the unlock signal from the switch 52 and does not transmit the command signal (the lock signal or the unlock signal) to the signal receiving unit 44d of the storage case 44. In this case, the locking state of the locking mechanism 44e of the storage case 44 is maintained.

The processor 61a receives the first rotational speed signal and the second rotational speed signal from each of the first vehicle speed sensor 54 and the second vehicle speed sensor 55. In case that the rotation speed of the front wheel 7 corresponding to the first rotational speed signal and the rotation speed of the rear wheel 9 corresponding to the second rotational speed signal are smaller than or equal to a predetermined value, the processor 61a transmits the command signal (the lock signal or the unlock signal) to the signal receiving unit 44d of the storage case 44 when the processor 61a receives the lock signal or the unlock signal from the switch 52. Thereby, the locking mechanism 44e of the storage case 44 is activated when the switch 52 is pressed. A range is which "the rotation speed is smaller than or equal to the predetermined value" is set to a range in which the straddled vehicle 1 is determined to be stationary.

When the rotational speed of the front wheel 7 corresponding to the first rotational speed signal and the rotational speed of the rear wheel 9 corresponding to the second rotational speed signal are larger than the predetermined value, the processor 61a does not transmit the command signal (the lock signal or the unlock signal) to the signal receiving unit 44d of the storage case 44 when the processor 61a receives the lock signal or the unlock signal from the switch 52. Thereby, even if the switch 52 is pressed during driving, the operation of the locking mechanism 44e of the storage case 44 is restricted. A range in which "the rotation speed is larger than the predetermined value" is set to a range in which the straddled vehicle 1 is determined to move.

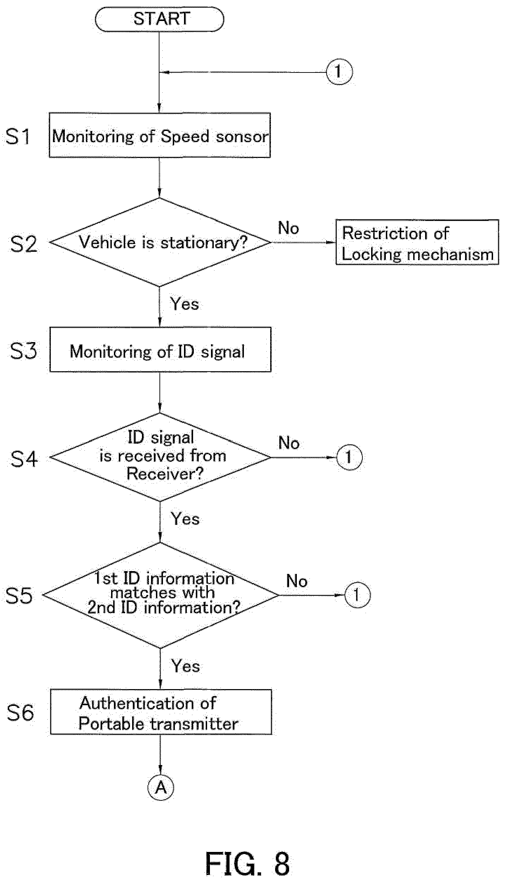

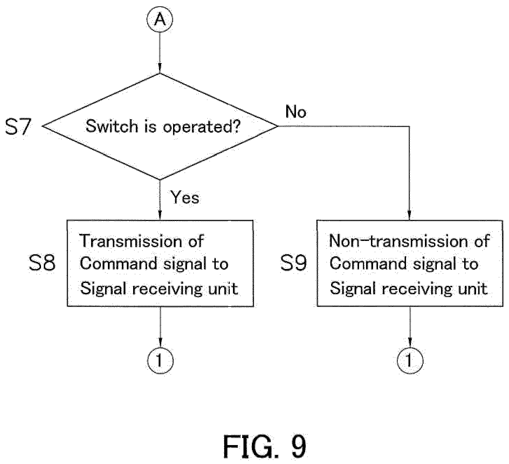

The lock changing system having the above functions is realized by the processor 61a as follows. FIGS. 8 and 9 are flowcharts of the lock changing system.

The processor 61a monitors the first rotational speed signal of the first vehicle speed sensor 54 and the second rotational speed signal of the second vehicle speed sensor 55 (S1). The processor 61a determines whether the straddled vehicle 1 is stationary based on the rotational speed of the front wheel 7 corresponding to the first rotational speed signal and the rotational speed of the rear wheel 9 corresponding to the second rotational speed signal (S2).

When the straddled vehicle 1 is not stationary (No in S2), for example, when the straddled vehicle 1 is moving (No in S2), the operation of the locking mechanism 44e of the storage case 44 is restricted even if the switch 52 is pressed during driving. When the straddled vehicle 1 is stationary (Yes in S2), the processor 61a performs processing of a step 3 (S3) at the lower side than.

The processor 61a monitors the identification signal (S3). The processor 61a determines whether the identification signal has been received from the receiver 51 (S4). When the processor 61a does not receive the identification signal from the receiver 51 (No in S4), for example, when the portable transmitter M is away from the receiver 51, the processor 61a performs the processing of the step 1 (S1).

When the processor 61a receives the identification signal from the receiver 51 (Yes in S4), for example, when the portable transmitter M approaches the receiver 51, the processor 61a determines whether the first identification information of the portable transmitter M matches with the second identification information recorded in the memory 61b (S5). When the first identification information and the second identification information do not match (No in S5), the processor 61a performs the processing of the step 1 (S1). In this case, the processor 61a does not authenticate the portable transmitter M and does not transmit the command signal (the lock signal or the unlock signal) to the signal receiving unit 44d of the storage case 44 even if the switch 52 is operated.

When the first identification information and the second identification information match (Yes in S5), the processor 61a recognizes the portable transmitter M (S6). The processor 61a determines whether the switch 52 has been operated (S7). When the switch 52 is operated (Yes in S7), the processor 61a transmits the command signal (the lock signal or the unlock signal) to the signal receiving unit 44d of the storage case 44 (S8).

Thereby, the locking mechanism 44e of the storage case 44 is locked or unlocked. For example, when the unlock button 52b of the switch 52 is pressed, the storage case 44 is unlocked. When the lock button 52a of the switch 52 is pressed, the storage case 44 is locked.

When the switch 52 is not operated (No in S7), the processor 61a does not transmit the command signal (the lock signal or the unlock signal) to the signal receiving unit 44d of the storage case 44 (S9).

The processor 61a always monitors the processing of the step 3 (S3) while the processing of the steps 7-9 (S7-S9) is performed. The processing of the steps 7-9 (S7-S9) are performed while the processor 61a receives the identification signal from the receiver 51 in step 4 (S4). On the other hand, when the processor 61a no longer receives the identification signal from the receiver 51 in step 4 (S4), the processing of the steps 7-9 (S7-S9) ends and the processing of the step 1 (S1) is performed.

The straddled vehicle 1 described above has the following features. With the straddled vehicle 1, the receiver 51 can easily recognize the portable transmitter M even if the portable transmitter M is positioned at the front side than the straddled vehicle 1 or at the rear side than the straddled vehicle 1, since the receiver 51 is mounted to the vehicle frame 2 at the lower side than the rider seat 5.

In addition, the receiver 51 can easily recognize the portable transmitter M even if the rider approaches the switch 52 to operate the switch 52, since the switch 52 is mounted to the vehicle frame 2 at the rear side than the receiver 51 and at the front side than the bracket 45 (the first side bracket 47 and the second side bracket 48).

Furthermore, the rider can easily access the storage case 44 (the left-side case 44a and the right-side case 44b) after the rider operates the switch 52. In other words, the straddled vehicle 1, which can easily recognize the portable transmitter M positioned around the straddled vehicle 1 and can improve accessibility to the storage case 44, is provided.

The receiver 51 can easily recognize the portable transmitter M when the rider approaches the switch 52, since the switch 52 is mounted to the vehicle frame 2 at one side in the vehicle width direction W orthogonal to the vehicle center plane H. The receiver can more easily recognize the portable transmitter M when the rider approaches the switch 52, since the receiver 51 is mounted to the vehicle frame 2 at the same side as the switch 52.

The rider can easily open and close the rider seat 5 after the rider access the storage case 44 (the left-side case 44a and the right-side case 44b), since the key cylinder 11 is mounted to the vehicle frame 2 at the same side as the switch 52. In addition, the rider can easily access the storage case 44 after the rider opens and closes the rider seat 5.

The rear cover 23 (the left rear cover 41) is mounted to the vehicle frame 2 at the rear side than the rider seat 5. The switch 52 is mounted to the side surface of the rear cover 23 (the left rear cover 41). Thereby, the rider can easily access the switch 52.

The switch 52 can be mounted to the upper surface of the rear cover 23 (the left rear cover 41). Even if the straddled vehicle 1 is configured in this way, the rider can easily access the switch 52.

The receiver 51 can easily recognize the portable transmitter M, since the receiver 51 is disposed at the upper side than the second left rear frame 27 and at the lower side than the first left rear frame 26.

It is possible to prevent a passenger from contacting the switch 52 in a state where the rider and the passenger ride on the straddled vehicle 1, since the switch 52 is disposed at the rear side than the swing shaft 29 of the tandem step 10.

The switch 52 is disposed at the upper side than the second left rear frame 27. In this configuration, the rider can easily operate the switch, since the at least a portion of the switch 52 is disposed at the upper side than the second left rear frame 27.

The rider can easily access the storage case 44 after the rider operates the switch 52, since the storage case 44 (the left-side case 44a and the right-side case 44b) is mounted to the bracket 45 (the first side bracket 47 and the second side bracket 48) including the above layout.

The straddled vehicle 1 can improve accessibility to the storage case 44 without reducing usability of the switch 52, since the switch 52 can be spaced apart from the storage case 44 so as not to overlap the storage case 44 (the left-side case 44a and the right-side case 44b) in the vehicle side view.

With the straddled vehicle 1, the controller 61 authenticates the portable transmitter M based on the identification signal from the portable transmitter M and the locking state of the storage case 44 (the left-side case 44a and the right-side case 44b) is changed based on the command signal (the lock signal or the unlock signal) from the controller 61 when the switch 52 is operated.

Thus, the locking state of the storage case 44 can be easily changed by the controller 61. For example, the locking state of the storage case 44 can be easily changed from one of the locked state and the unlocked state to the other of the locked state and the unlocked state by operation of the switch 52.

It is possible to prevent the passenger from contacting the switch 52 in a state where the rider and the passenger ride on the straddled vehicle 1, since the switch mounting surface 41b incline inward in the vehicle width direction W as the switch mounting surface 41b goes toward the lower side.

The switch holder 43 is mounted to the vehicle frame 2 at the rear side than the receiver 51 and at the front side than the bracket 45 (the first side bracket 47 and the second side bracket 48). Thereby, the receiver 51 can easily recognize the portable transmitter M even if the rider approaches the switch 52 to operate the switch 52.

In addition, the rider can easily access the storage case 44 (the left-side case 44a and the right-side case 44b) after the rider operates the switch 52. In other words, the straddled vehicle 1, which can easily recognize the portable transmitter M positioned around the straddled vehicle 1 and can improve accessibility to the storage case 44, is provided.

### Industrial Applicability

According to the present teaching, a straddled vehicle, which can easily recognize a portable transmitter positioned around the straddled vehicle and can improve accessibility to a storage case, is provided.

### Reference Signs List

- 1: straddled vehicle
- 2: vehicle frame
- 5: rider seat
- 10: tandem step
- 11: key cylinder
- 24: rear cover
- 26: first left rear frame
- 27: second left rear frame
- 41: left rear cover
- 41b: switch mounting surface
- 43: switch holder
- 44d: signal receiving unit
- 44: storage case
- 44a: left-side case
- 44b: right-side case
- 45: bracket
- 47: first side bracket
- 48: second side bracket
- 51: receiver
- 52: switch
- 61: controller
- H: vehicle center plane
- M: portable transmitter
- W: vehicle width direction

## Claims

1. A straddled vehicle (1) configured to mount a storage case (44) and configured to change a locking state of the storage case (44) according to an identification signal, and a portable transmitter (M) configured to transmit the identification signal to authenticate the portable transmitter (M),
the straddled vehicle (1) comprises:
a vehicle body (2);
a seat (5) provided on the vehicle body (2);
a bracket (45) disposed at a rear side than the seat (5) in a vehicle front-rear direction and provided on the vehicle body (2), the bracket (45) is configured to mount the storage case (44) to the vehicle body (2);
a receiver (51) mounted to the vehicle body (2) at a lower side than the seat (5) in a vehicle vertical direction and configured to receive the identification signal, wherein the receiver (51) is configured to receive the identification signal from the portable transmitter (M); and
a switch (52) mounted to the vehicle body (2) at the rear side than the receiver (51) and at a front side than the bracket (45) in the vehicle front-rear direction, the switch (52) configured to be operated to change the locking state of the storage case (44) at least from a locked state to an unlocked state after the receiver (51) has received the identification signal from the portable transmitter (M).

2. The straddled vehicle (1) according to claim 1, wherein the vehicle body (2) includes a vehicle center line extending in the vehicle front-rear direction; and
the switch (52) is mounted to the vehicle body (2) at one side in a vehicle width direction (W) orthogonal to the vehicle center line.

3. The straddled vehicle (1) according to claim 2, wherein the receiver (51) is mounted to the vehicle body (2) at the one side in a vehicle width direction (W).

4. The straddled vehicle (1) according to claim 2 or 3, further comprising:
a key cylinder (11) configured to open and close the seat (5) and mounted to the vehicle body (2) at the one side in the vehicle width direction (W).

5. The straddled vehicle (1) according to at least one of the claims 1 to 4, further comprising:
a rear cover (41) mounted to the vehicle body (2) at the rear side than the seat (5) in the vehicle front-rear direction; wherein
the switch (52) is mounted to a side surface of the rear cover (41).

6. The straddled vehicle (1) according to at least one of the claims 1 to 4, further comprising:
a rear cover (41) mounted to the vehicle body (2) at the rear side than the seat (5) in the vehicle front-rear direction; wherein
the switch (52) is mounted to an upper surface of the rear cover (41) in the vehicle vertical direction.

7. The straddled vehicle (1) according to at least one of the claims 1 to 6, wherein the vehicle body (2) includes a first rear frame (26, 30) and a second rear frame (27, 31);
the first rear frame supports (26, 30) the seat (5) ;
the second rear frame (27, 31) is disposed at the lower side than the first rear frame (26, 30) ) in the vehicle vertical direction and is connected to a rear portion of the first rear frame (26, 30) in the vehicle front-rear direction; and
the receiver (51) is disposed at an upper side than the second rear frame (27, 31) in the vehicle vertical direction, and/or
at least a portion of the switch (52) is disposed at the upper side than the second rear frame (27, 31) in the vehicle vertical direction.

8. The straddled vehicle (1) according to claim 7, wherein the receiver (51) is disposed at the lower side than the first rear frame (26, 30) in the vehicle vertical direction.

9. The straddled vehicle (1) according to at least one of the claims 1 to 8, further comprising:
a tandem step (10) including a mounting portion (29) mounted to the vehicle body (2); wherein
the switch (52) is disposed at the rear side than the mounting portion (29) of the tandem step (10) in the vehicle front-rear direction.

10. The straddled vehicle (1) according to at least one of the claims 1 to 9, wherein, with the storage case (44) mounted to the bracket (45), the switch (52) is spaced apart from the storage case (44) so as not to be overlapped by the storage case (44) in a vehicle side view.

11. The straddled vehicle (1) according to at least one of the claims 1 to 10, wherein the vehicle body (2) has a mounting surface (41b) on which the switch (52) is mounted; and
the mounting surface (41b) inclines inward in a vehicle width direction (W) orthogonal to the vehicle front-rear direction as the mounting surface (41b) goes toward a lower side in the vehicle vertical direction.

12. The straddled vehicle (1) according to at least one of the claims 1 to 11, further comprising:
a switch holder (43) mounted to the vehicle body (2) at the rear side than the receiver (51) and at a front side than the bracket (45) in the vehicle front-rear direction, the switch holder (43) is configured to hold the switch (52) operated to change the locking state of the storage case (44).

13. The straddled vehicle (1) according to at least one of the claims 1 to 12, further comprising:
a controller (61) configured to authenticate the portable transmitter (M) based on the identification signal; wherein
the storage case (44) includes a signal receiving unit (44d) configured to receive a command signal for changing the locking state from the controller (61); and
the controller (61) is configured to transmit the command signal to the signal receiving unit (44d) when the switch (52) is operated in a state where the portable transmitter (M) is authenticated.

## Patentansprüche

1. Ein Spreizsitzfahrzeug (1), das zum Anbringen eines Aufbewahrungsbehälters (44) und zum Ändern eines Verriegelungszustands des Aufbewahrungsbehälters (44) entsprechend einem Identifikationssignal konfiguriert ist, und ein tragbarer Sender (M), der zum Senden des Identifikationssignals zum Authentifizieren des tragbaren Senders (M) konfiguriert ist,
wobei das Spreizsitzfahrzeug (1) umfasst:
ein Fahrzeugkörper (2);
einen Sitz (5), der am Fahrzeugkörper (2) vorgesehen ist;
eine Halterung (45), die in der Vorder-Rück-Richtung hinter dem Sitz (5) angeordnet und am Fahrzeugkörper (2) vorgesehen ist, wobei die Halterung (45) so konfiguriert ist, dass sie den Aufbewahrungsbehälter (44) am Fahrzeugkörper (2) befestigt;
einen Empfänger (51), der am Fahrzeugkörper (2) an einer Seite unterhalb des Sitzes (5) in vertikaler Fahrzeugrichtung angebracht und zum Empfangen des Identifikationssignals konfiguriert ist, wobei der Empfänger (51) zum Empfangen des Identifikationssignals vom tragbaren Sender (M) konfiguriert ist; und
ein Schalter (52), der am Fahrzeugkörper (2) hinter dem Empfänger (51) und vor der Halterung (45) in der Fahrzeug-Vorder-Rück-Richtung angebracht ist, wobei der Schalter (52) so konfiguriert ist, dass er betätigt werden kann, um den Verriegelungszustand des Aufbewahrungsbehälters (44) zumindest von einem verriegelten Zustand in einen entriegelten Zustand zu ändern, nachdem der Empfänger (51) das Identifikationssignal vom tragbaren Sender (M) empfangen hat.

2. Das Spreizsitzfahrzeug (1) gemäß Anspruch 1, wobei der Fahrzeugkörper (2) eine Fahrzeugmittellinie enthält, die sich in der Fahrzeug-Vorder-Rück-Richtung erstreckt; und
der Schalter (52) an dem Fahrzeugkörper (2) an einer Seite in Fahrzeugbreitenrichtung (W) orthogonal zur Fahrzeugmittellinie angebracht ist.

3. Das Spreizsitzfahrzeug (1) gemäß Anspruch 2, wobei der Empfänger (51) an einer Seite in Fahrzeugbreitenrichtung (W) am Fahrzeugkörper (2) angebracht ist.

4. Das Spreizsitzfahrzeug (1) gemäß Anspruch 2 oder 3, das ferner umfasst:
einen Schlüsselzylinder (11), der zum Öffnen und Schließen des Sitzes (5) konfiguriert ist und an einer Seite in Fahrzeugbreitenrichtung (W) am Fahrzeugkörper (2) angebracht ist.

5. Das Spreizsitzfahrzeug (1) gemäß zumindest einem Anspruch 1 bis 4, ferner umfassend:
eine hintere Abdeckung (41), die am Fahrzeugkörper (2) an der Rückseite des Sitzes (5) in der Fahrzeug-Vorder-Rück-Richtung angebracht ist; wobei der Schalter (52) an einer Seitenfläche der hinteren Abdeckung (41) angebracht ist.

6. Das Spreizsitzfahrzeug (1) gemäß zumindest einem Anspruch 1 bis 4, ferner umfassend:
eine hintere Abdeckung (41), die am Fahrzeugkörper (2) an der Rückseite des Sitzes (5) in der Fahrzeug-Vorder-Rück-Richtung angebracht ist; wobei der Schalter (52) an einer Oberseite der hinteren Abdeckung (41) in Fahrzeugvertikalrichtung angebracht ist.

7. Das Spreizsitzfahrzeug (1) gemäß zumindest einem Anspruch 1 bis 6, wobei der Fahrzeugkörper (2) einen ersten hinteren Rahmen (26, 30) und einen zweiten hinteren Rahmen (27, 31) enthält;
der erste hintere Rahmen (26, 30) den Sitz (5) trägt;
der zweite hintere Rahmen (27, 31) in Fahrzeugvertikalrichtung unterhalb des ersten hinteren Rahmens (26, 30) angeordnet ist und in Fahrzeug-Vorder-Rück-Richtung mit einem hinteren Abschnitt des ersten hinteren Rahmens (26, 30) verbunden ist; und der Empfänger (51) im Fahrzeug vertikal oberhalb des zweiten hinteren Rahmens (27, 31) angeordnet ist und/oder
zumindest ein Abschnitt des Schalters (52) im Fahrzeug vertikal oberhalb des zweiten hinteren Rahmens (27, 31) angeordnet ist.

8. Das Spreizsitzfahrzeug (1) gemäß Anspruch 7, wobei der Empfänger (51) in Fahrzeugvertikalrichtung unterhalb des ersten hinteren Rahmens (26, 30) angeordnet ist.

9. Das Spreizsitzfahrzeug (1) gemäß zumindest einem Anspruch 1 bis 8, ferner umfassend:
eine Tandemstufe (10) mit einem Befestigungsabschnitt (29), der an dem Fahrzeugkörper (2) angebracht ist; wobei
der Schalter (52) in der Fahrzeug-Vorder-Rück-Richtung hinter dem Befestigungsabschnitt (29) der Tandemstufe (10) angeordnet ist.

10. Das Spreizsitzfahrzeug (1) gemäß zumindest einem Anspruch 1 bis 9, wobei bei an der Halterung (45) montiertem Aufbewahrungsbehälter (44) der Schalter (52) vom Aufbewahrungsbehälter (44) beabstandet ist, so dass er in einer Seitenansicht des Fahrzeugs nicht vom Aufbewahrungsbehälter (44) überlappt wird.

11. Das Spreizsitzfahrzeug (1) gemäß zumindest einem Anspruch 1 bis 10, wobei der Fahrzeugkörper (2) eine Befestigungsfläche (41b) aufweist, auf der der Schalter (52) befestigt ist; und
die Befestigungsfläche (41b) in Fahrzeugbreitenrichtung (W) orthogonal zur Fahrzeug-Vorder-Rück-Richtung nach innen geneigt ist, wenn die Befestigungsfläche (41b) in Fahrzeugvertikalrichtung zu einer Unterseite hin verläuft.

12. Das Spreizsitzfahrzeug (1) gemäß zumindest einem Anspruch 1 bis 11, ferner umfassend:
einen Schalterhalter (43), der am Fahrzeugkörper (2) hinter dem Empfänger (51) und vor der Halterung (45) in der Fahrzeug-Vorder-Rück-Richtung angebracht ist, wobei der Schalterhalter (43) so konfiguriert ist, dass er den Schalter (52) hält, der betätigt wird, um den Verriegelungszustand des Aufbewahrungsbehälters (44) zu ändern.

13. Das Spreizsitzfahrzeug (1) gemäß zumindest einem Anspruch 1 bis 12, ferner umfassend:
eine Steuerung (61), die so konfiguriert ist, dass sie den tragbaren Sender (M) auf der Grundlage des Identifikationssignals authentifiziert; wobei
der Aufbewahrungsbehälter (44) enthält eine Signalempfangseinheit (44d), die so konfiguriert ist, dass sie ein Befehlssignal zum Ändern des Verriegelungszustands von der Steuereinheit (61) empfängt; und
die Steuereinheit (61) so konfiguriert ist, dass sie das Befehlssignal an die Signalempfangseinheit (44d) sendet, wenn der Schalter (52) in einem Zustand betätigt wird, in dem der tragbare Sender (M) authentifiziert ist.

## Revendications

1. Véhicule à enfourcher (1) configuré pour monter un coffre de rangement (44) et configuré pour changer l'état de verrouillage du coffre de rangement (44) en fonction d'un signal d'identification, et comportant un émetteur portable (M) configuré pour transmettre le signal d'identification afin d'authentifier l'émetteur portable (M),
le véhicule à enfourcher (1) comprenant :
un corps de véhicule (2) ;
un siège (5) pourvu sur le corps de véhicule (2) ;
un support (45) disposé sur un côté en arrière du siège (5) en direction avant-arrière du véhicule et pourvu sur le corps de véhicule (2), le support (45) étant configuré pour monter le coffre de rangement (44) sur le corps de véhicule (2) ;
un récepteur (51) monté sur le corps de véhicule (2) sur un côté plus bas que le siège (5) en direction verticale du véhicule et configuré pour recevoir le signal d'identification, dans lequel le récepteur (51) est configuré pour recevoir le signal d'identification provenant de l'émetteur portable (M) ; et
un commutateur (52) monté sur le corps de véhicule (2) sur le côté en arrière du récepteur (51) et sur le côté en avant du support (45) en direction avant-arrière du véhicule, le commutateur (52) étant configuré pour être actionné afin de changer l'état de verrouillage du coffre de rangement (44) au moins d'un état verrouillé à un état déverrouillé après que le récepteur (51) a reçu le signal d'identification provenant de l'émetteur portable (M).

2. Véhicule à enfourcher (1) selon la revendication 1, dans lequel
le corps de véhicule (2) inclut une ligne centrale du véhicule qui s'étend en direction avant-arrière du véhicule ; et
le commutateur (52) est monté sur le corps de véhicule (2) sur un côté dans une direction de la largeur du véhicule (W) orthogonale à la ligne centrale du véhicule.

3. Véhicule à enfourcher (1) selon la revendication 2, dans lequel le récepteur (51) est monté sur le corps de véhicule (2) sur ledit côté en direction de la largeur du véhicule (W).

4. Véhicule à enfourcher (1) selon la revendication 2 ou 3, comprenant en outre :
un cylindre de clé (11) configuré pour ouvrir et fermer le siège (5) et monté sur le corps de véhicule (2) sur ledit côté en direction de la largeur du véhicule (W).

5. Véhicule à enfourcher (1) selon au moins l'une des revendications 1 à 4, comprenant en outre :
un carénage arrière (41) monté sur le corps de véhicule (2) sur le côté en arrière du siège (5) en direction avant-arrière du véhicule ; dans lequel
le commutateur (52) est monté sur une surface latérale du carénage arrière (41).

6. Véhicule à enfourcher (1) selon au moins l'une des revendications 1 à 4, comprenant en outre :
un carénage arrière (41) monté sur le corps de véhicule (2) sur le côté en arrière du siège (5) en direction avant-arrière du véhicule ; dans lequel
le commutateur (52) est monté sur une surface supérieure du carénage arrière (41) en direction verticale du véhicule.

7. Véhicule à enfourcher (1) selon au moins l'une des revendications 1 à 6, dans lequel
le corps de véhicule (2) inclut un premier châssis arrière (26, 30) et un deuxième châssis arrière (27, 31) ;
le premier châssis arrière supporte (26, 30) le siège (5) ;
le deuxième châssis arrière (27, 31) est disposé sur le côté plus bas que le premier châssis arrière (26, 30) en direction verticale du véhicule et est connecté à une portion arrière du premier châssis arrière (26, 30) en direction avant-arrière du véhicule ; et
le récepteur (51) est disposé sur le côté plus haut que le deuxième châssis arrière (27, 31) en direction verticale du véhicule, et/ou
au moins une portion du commutateur (52) est disposée sur le côté plus haut que le deuxième châssis arrière (27, 31) en direction verticale du véhicule.

8. Véhicule à enfourcher (1) selon la revendication 7, dans lequel le récepteur (51) est disposé sur le côté plus bas que le premier châssis arrière (26, 30) en direction verticale du véhicule.

9. Véhicule à enfourcher (1) selon au moins l'une des revendications 1 à 8, comprenant en outre :
un double repose-pied (10) incluant une portion de montage (29) montée sur le corps de véhicule (2) ; dans lequel
le commutateur (52) est disposé sur le côté en arrière de la portion de montage (29) du double repose-pied (10) en direction avant-arrière du véhicule.

10. Véhicule à enfourcher (1) selon au moins l'une des revendications 1 à 9, dans lequel, avec le coffre de rangement (44) monté sur le support (45), le commutateur (52) est espacé du coffre de rangement (44) de manière à ne pas être chevauché par le coffre de rangement (44) en vue latérale du véhicule.

11. Véhicule à enfourcher (1) selon au moins l'une des revendications 1 à 10, dans lequel
le corps de véhicule (2) comporte une surface de montage (41b) sur laquelle est monté le commutateur (52) ; et
la surface de montage (41b) s'incline vers l'intérieur dans une direction de la largeur du véhicule (W) orthogonale à la direction avant-arrière du véhicule à mesure que la surface de montage (41b) est plus proche d'un côté inférieur en direction verticale du véhicule.

12. Véhicule à enfourcher (1) selon au moins l'une des revendications 1 à 11, comprenant en outre :
un support de commutateur (43) monté sur le corps de véhicule (2) sur le côté en arrière du récepteur (51) et sur le côté en avant du support (45) en direction avant-arrière du véhicule, le support de commutateur (43) étant configuré pour supporter le commutateur (52) actionné pour changer l'état de verrouillage du coffre de rangement (44).

13. Véhicule à enfourcher (1) selon au moins l'une des revendications 1 à 12, comprenant en outre :
un contrôleur (61) configuré pour authentifier l'émetteur portable (M) sur la base du signal d'identification ; dans lequel
le coffre de rangement (44) inclut une unité de réception de signal (44d) configurée pour recevoir un signal de commande pour changer l'état de verrouillage depuis le contrôleur (61) ; et
le contrôleur (61) est configuré pour transmettre le signal de commande à l'unité de réception de signal (44d) quand le commutateur (52) est actionné dans un état où l'émetteur portable (M) est authentifié.
